(19) Europäisches Patentamt
European Patent Office
Office européen des brevets

(11) EP 1 193 295 B1

(12) EUROPÄISCHE PATENTSCHRIFT

(45) Veröffentlichungstag und Bekanntmachung des Hinweises auf die Patenterteilung:
**09.08.2006 Patentblatt 2006/32**

(21) Anmeldenummer: **01121777.5**

(22) Anmeldetag: **20.09.2001**

(51) Int Cl.:
***C08L 77/00*** (2006.01) ***C08L 77/02*** (2006.01)
***C08L 77/06*** (2006.01) ***C08J 5/18*** (2006.01)
*C08L 77/00* (2006.01) *C08L 51/06* (2006.01)

(54) **Polyamidhaltige Kunststoff-Zusammensetzungen und daraus hergestellte Folien**

Polyamide-containing polymer compositions and films produced from these

Compositions poymèriques à base de polyamide et films fabriqués à partir de celles-ci

(84) Benannte Vertragsstaaten:
**AT BE CH CY DE DK ES FI FR GB GR IE IT LI LU MC NL PT SE TR**

(30) Priorität: **27.09.2000 DE 10047772**

(43) Veröffentlichungstag der Anmeldung:
**03.04.2002 Patentblatt 2002/14**

(73) Patentinhaber: **Kalle GmbH**
**65203 Wiesbaden (DE)**

(72) Erfinder:
- **Delius, Ulrich, Dr.**
  **60529 Frankfurt (DE)**
- **Fritz, Hans-Gerhard, Prof. Dr.-Ing.**
  **73066 Uhingen (DE)**
- **Lü, Runsheng, Dipl.-Ingenieur**
  **70569 Stuttgart (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 286 734** **WO-A-93/00404**
**DE-A- 2 850 182**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 193 295 B1

Printed by Jouve, 75001 PARIS (FR)

## Beschreibung

Die Erfindung betrifft eine Polymerlegierung mit einerzusammenhängenden (kohärenten) Phase aus einem aliphatischen und/oder teilaromatischen (Co-)Polyamid und einer darin dispergierten Phase aus einem olefinischen Polymer. Sie betrifft ferner daraus hergestellte, gereckte Flach- oder Schlauchfolien. Die Folien eignen sich besonders für die Verpackung von Lebensmitteln, speziell als künstliche Wursthülle.

Als Verpackungsmaterial für Lebensmittel haben Folien auf der Basis von Polyamid breite Anwendung gefunden. Sie zeigen eine hohe mechanische Festigkeit (Reiß-und Durchstoßfestigkeit) und eine gute Formbeständigkeit im warmen Zustand, wodurch eine Wärmebehandlung (beispielsweise ein Garprozeß oder eine Hitzesterilisierung) des Lebensmittels in der Verpackung möglich ist. Wenn sie genügend Feuchtigkeit aufgenommen haben, sind sie mechanisch sehrflexibel und dadurch geeignet für die Verarbeitung auf automatischen Füll- und Verpackungsanlagen. Sie schmiegen sich an die Oberfläche des Füllguts an, bieten darüber hinaus eine gute Sauerstoff- und Aromabarriere und kommen ohne Zusatz von Weichmachern oder anderen Additiven aus, so daß die flüchtigen oder migrierenden Bestandteile vermieden werden können. Sie sind nach verschiedenen Methoden herstellbar, beispielsweise nach dem Foliengieß- oder dem Schlauchblasverfahren, wobei die Folien anschließend jeweils noch mono- oder biaxial verstreckt werden können.

Heute wird Polyamid (PA) in beträchtlichem Umfang über Verstreckprozesse zu biaxial orientierten Schlauchfolien verarbeitet. Die Verstreckung bewirkt eine gesteigerte Festigkeit der Folie sowie besseres Rückdeformationsverhalten. Darüber hinaus schrumpfen verstreckte Folien bei Hitzeeinwirkung, soweit sie nicht vollständig thermofixiert sind. Beispiele für dieses Anwendungsgebiet finden sich in den DE-C-28 50 182 und 28 50 181 sowie der EP-A 325 151. Es werden jeweils biaxial verstreckte Wursthüllen auf Basis aliphatischer Polyamide beschrieben. Die letztgenannten beiden Schriften beschreiben Hüllen aus einem Polyamid und mindestens einem weiteren Polymer. Als weitere Polymer offenbart sind ein lonomer und/oder ein modifiziertes Ethylen-Vinylacetat-Copolymer, wobei das letztgenannte Copolymer bevorzugt ein quaternäres Copolymer mit Einheiten aus Ethylen, Isobutylen, einer aliphatisch ungesättigten Carbonsäure und einem Ester davon ist (DE-A 28 50 181) oder eine Kombination aus einem Polyalkylenterephthalat und einem teilaromatisches Polyamid (EP-A 325 151).

Durch die Kombination von aliphatischem Polyamid mit einem oder mehreren der genannten Polymere lassen sich die Eigenschaften der daraus hergestellten Folien beeinflussen. Zu diesen Eigenschaften zählen die Weiterreißfestigkeit, die auch die Abringelbarkeit der Wursthülle bestimmt, das elastische Rückformverhalten und die Durchlässigkeit der Folien für Sauerstoff oder Wasserdampf.

Aus der Praxis der Kunststoffverarbeitung ist bekannt, daß solche weiteren Polymere nur in relativ kleinen Anteilen zugesetzt werden (bis etwa 20 Gew.-%), da der Prozeß einer stationären, d.h. kontinuierlichen Folienverstrekkung hohe Anforderungen an die Homogenität des Werkstoffes stellt. Die Fremdpolymere sind mit dem Polyamid auf molekularer Basis unverträglich, weshalb mit steigendem Anteil dieser immer größere disperse Partikel aus Fremdpolymer in der Polyamidphase entstehen. Wenn jedoch der Durchmesser der dispersen Partikel in die Größenordnung der Foliendicke kommt, dann durchdringen die Partikel die gesamte Folie und schwächen deren mechanische Belastbarkeit. Weiterhin ist die Anbindung zwischen Polyamid und Fremdpolymer rein auf physikalische Wechselwirkungen beschränkt. Die Grenzflächen stellen damit mechanische Schwachstellen dar. Verstreckprozesse induzieren grundsätzlich eine hohe mechanische Spannung in der Folie und verlangen daher nach einem guten mechanischen Zusammenhalt des Werkstoffs. Andernfalls kommt es zum Zerreißen der Folie.

Eine charakteristische Eigenschaft aller Polyamide ist die starke Abhängigkeit der mechanischen Eigenschaften von der Feuchte. Beispielsweise hat PA-6 im wasserfreien Zustand einen E-Modul von etwa 3 GPa. Im feuchten Zustand sinkt der E-Modul steil ab und erreicht bei 100% relativer (Umgebungs-)Feuchte einen Wert von nur noch etwa 900 MPa. Andere Polyamide verhalten sich ähnlich. Die "Steifigkeit" bzw. die "Flexibilität" von Polyamid ist also in hohem Maße von der Umgebungsfeuchte abhängig.

In der WO 93/00404 ist eine Folie auf Basis von Polyamid offenbart, deren Eigenschaften weniger stark durch den Feuchtegehalt beeinflußt werden. Erreicht wird dies durch Abmischen des Polyamids mit einem modifizierten Polyolefin. Hergestellt wird das modifizierte Polyolefin durch Umsetzen eines kristallinen oder kristallisierbaren Homo- oder Copolymers aus bzw. mit $\alpha$-Olefin-Einheiten - wobei das $\alpha$-Olefin 2 bis 6 Kohlenstoffatome enthält - mit ungesättigten Carbonsäuren oder Anhydriden davon. Geeignete Polyolefine sind beispielsweise Polyethylene (speziell HDPE, LDPE und LLDPE), Polypropylen oder Polybutylen. Die ungesättigten Carbonsäuren oder deren Anhydride sind beispielsweise Maleinsäure, Maleinsäureanhydrid, Fumarsäure, Crotonsäure, Citraconsäureanhydrid oder Itaconsäureanhydrid. Der Anteil des modifizierten Polyolefins beträgt dabei 5 bis 50 Gew.-%, bezogen auf das Gesamtgewicht der Polymermischung. Das modifizierte Polyolefin kann darüber hinaus abgemischt sein mit einem (nicht modifizierten) thermoplastischen Elastomer, wie die Beispiele 2 und 3 der WO-Schrift belegen. Das thermoplastische Elastomer ist beispielsweise ein Ethylen/Propylen-Copolymer, ein Ethylen/1-Buten-Copolymer, Poly(1-Buten), Polybutadien, ein Styrol/Butadien-Blockcopolymer, Polyisopren oder Polyisobutylen. Folien aus dem Gemisch von Polyamid und modifiziertem Polyolefin sind weicher und flexibler als Folien aus reinem Polyamid. Schlauchförmige Folien aus diesem Material sind jedoch

noch immer nicht elastisch genug, um als künstliche Wursthüllen geeignet zu sein.

Bei der Verpackung feuchter Lebensmittel und/oderAnwendungen mit Erhitzen der Verpackung im Wasser (dampf) ist die Flexibilität von besonderer Bedeutung. In der Regel ist man daran interessiert, im Moment des Befüllens eine Folie mit großer Flexibilität bzw. niedrigem E-Modul vorliegen zu haben. Im Zuge der anschließenden Erwärmung ist dagegen eine gute Formbeständigkeit der Folie erwünscht. Beim darauf folgenden Abkühlen, wobei sich das Füllgut wieder zusammenzieht, ist ein "Mitgehen" der Folie, d.h. eine möglichst restlose elastische Rückverformung erwünscht.

Die Rückverformungskraft ist naturgemäß identisch mit der Kraft, die die Folie einer weiteren "Verdehnung" entgegensetzt. Eine trockene, steife Folie baut eine höhere Rückstellspannung auf als eine feuchte, flexible Folie.

Die Konsequenz ist, daß Polyamidfolien im produktionsfrischen, trockenen Zustand für die genannten Anwendungsgebiete wenig geeignet sind. Während des Füllens/Verpackens verhält die Folie sich unflexibel und kann kaum elastisch gedehnt werden. Nach Durchfeuchtung durch das Füllgut ist sie dann weich und das ohnehin schwache Rückstellmoment ist nochmals gemindert. Das Endresultat sind "schlaffe" oder faltige Packungen oder Abfüllungen mit einer für den Verbraucher wenig ansprechenden Optik.

Um die Polyamidfolien in "feuchten" Anwendungen flexibler zu machen, werden sie vor der Verarbeitung fast immer in Wasser eingeweicht (konditioniert). Dieser Arbeitsschritt hat jedoch mehrere Nachteile. Zum einen birgt das Einweichen stets Hygienerisiken, d.h. die Gefahr von Verschmutzung oder Verkeimung der Folienoberfläche. Zum anderen setzt das Einweichen, das in der Praxis mindestens 30 min dauert, eine Planung der benötigten Folienmenge voraus. Einmal eingeweichte Folien müssen schnell verarbeitet werden, da bei einer Lagerung mit starkem Keimwachstum auf der Oberfläche gerechnet werden muß.

Ausgehend von der WO 93/00404 bestand die Aufgabe darin, das dort beschriebene Polymermaterial so zu verbessern, daß sich daraus Folien mit optimaler Elastizität herstellen lassen. Der Folienwerkstoff soll sich - analog zu herkömmlichem Polyamid - problemlos zu biaxial gereckten Folien und Schläuchen verarbeiten lassen und auch keinen der zuletzt geschilderten Nachteile aufweisen. Er soll bereits im trockenen Zustand Eigenschaften aufweisen, die denen von vorbefeuchteten (konditioniertem) Polyamid gleichkommen und sich auch nach Wasserzutritt nicht signifikant verändern. Die daraus hergestellten Flach- oder Schlauchfolien sollen dementsprechend ohne vorheriges Wässern in "feuchten" Anwendungen (wie sie bei der Wurstherstellung üblich sind) einsetzen lassen. Auch nach Erhitzen und/oder nach Lagerung soll die Folie, speziell die Wursthülle, noch straff am Füllgut anliegen und keine Falten zeigen.

Gelöst wird die Aufgabe mit Olefin-Blockcopolymeren, die mit intramolekularen Di-oder Polycarbonsäureanhydriden gepfropft sind und sich aufgrund der dadurch bewirkten Funktionalisierung in einer (Co-)Polyamidmatrix dispers verteilen lassen. Durch die disperse Phase lassen sich die Eigenschaften der Matrix in der gewünschten Weise modifizieren.

Gegenstand dervorliegenden Anmeldung ist demgemäß eine Polymerlegierung mit einerzusammenhängenden (kohärenten) Phase aus einem aliphatischen und/oder teilaromatischen (Co-)Polyamid und einer darin dispergierten Phase aus einem olefinischen Polymer, dadurch gekennzeichnet, daß das olefinische Polymer ein mit intramolekularen Carbonsäureanhydriden gepfropftes Olefin-Blockcopolymer ist.

Der Begriff (Co-)Polyamid steht dabei für Polyamid und/oder Copolyamid, wobei die Copolyamide zwei oder mehr verschiedene Monomer-Einheiten aufweisen können. Die teilaromatischen Copolyamide enthalten vorzugsweise Einheiten aus aromatischen Diaminen oder aromatischen Dicarbonsäuren, können aber auch Einheiten aus aromatischen Aminocarbonsäuren bzw. deren Lactamen enthalten.

Der Anteil der kohärenten Polyamidphase beträgt allgemein 50 bis 95 Gew.-%, bevorzugt 60 bis 90 Gew.-%, besonders bevorzugt 65 bis 80 Gew.-%, jeweils bezogen auf das Gesamtgewicht der Polymerlegierung.

Der Anteil des in der Polyamidphase dispergierten, gepfropften Olefin-Blockcopolymers beträgt allgemein 5 bis 50 Gew.- %, bevorzugt 10 bis 40 Gew.-%, besonders bevorzugt 20 bis 35 Gew.-%, wiederum jeweils bezogen auf das Gesamtgewicht der Polymerlegierung.

Die kohärente Polyamidphase kann demnach ein aliphatisches (Co-)Polyamid, eine Mischung mehrerer aliphatischer (Co-)Polyamide oder eine Mischung von mindestens einem aliphatischen (Co-)Polyamid mit mindestens einem teilaromatischen (Co-)Polyamid umfassen.

Geeignete aliphatische (Co-)Polyamide sind beispielsweise PA-6 (Polyamid aus ε-Caprolactam), PA-6/66 (Copolyamid aus ε-Caprolactam, Hexamethylendiamin und Adipinsäure), PA-6/69 (Copolyamid aus ε-Caprolactam, Hexamethylendiamin und Azelainsäure), PA-6/12 (Copolyamid aus ε-Caprolactam und ω-Laurinlactam). Von diesen wiederum ist das PA-6/66 besonders bevorzugt.

Geeignete teilaromatische (Co-)Polyamide sind beispielsweise PA-6-I (Copolyamid aus Hexamethylendiamin und Isophthalsäure), PA-6I/6T (Copolyamid aus Hexamethylendiamin, Isophthalsäure und Terephthalsäure), PA-6/6I (Copolyamid aus ε-Caprolactam, Hexamethylendiamin und Isophthalsäure).

Das Molekulargewicht (Zahlenmittel $M_n$) der aliphatischen oder teilaromatischen Polyamide beträgt vorzugsweise etwa 20.000 bis 40.000 g/mol.

Das Olefin-Blockcopolymer, das mit Carbonsäureanhydriden gepfropft wird, entstammt allgemein einem sogenannten "Multi-Monomer, Multi-Reaktorprozeß" entstammt. Bei einem solchen werden im Minimum zwei Monomere

in verschiedenen Reaktionssystemen vorpolymerisiert. Eine typische Monomerkombination besteht aus Propylen, Ethylen und 1-Buten. Die in einem ersten Reaktorsystem polymerisierten PP-Blöcke werden in den in einem zweiten Reaktor aufgebauten EPM-Blöcken reaktorgeblendet. Anschließend kann dieses PP/EPM-Reaktorblend noch mit in einem dritten Reaktor vorpolymerisierten EBM-Blöcken erneut reaktorgeblendet werden (intragranuläre Polymerisation). Das EBM kann dabei bis zu 70 Vol.-% im fertigen Blockcopolymer ausmachen. Diese Polymerisationstechnik wurde als "Catalloy-Technologie" durch die Firma Montell in den Markt eingeführt. Derartige Olefin-Blockcopolymere, die auch andere α-Olefine, insbesondere solche mit 4 bis 8 Kohlenstoffatomen, enthalten können, lassen sich mit der Strukturformel (I)

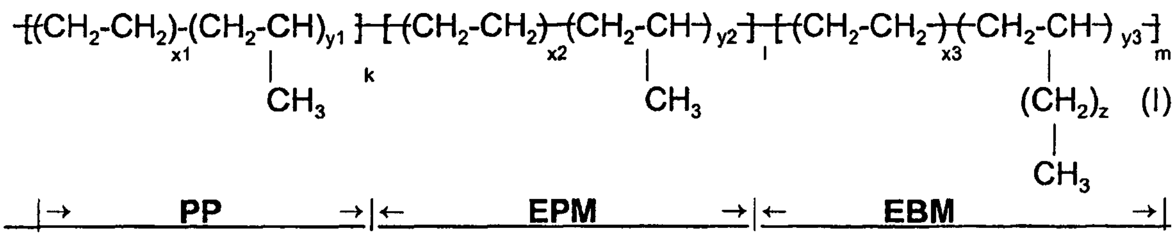

(I)

darstellen, wobei k, l und m die Polymerisationsgrade der einzelnen Blöcke und $x_1$, $x_2$, $x_3$, $y_1$, $y_2$ und $y_3$ die Monomerverhältnisse innerhalb des jeweiligen Blocks angeben. z drückt die Zahl der Methylengruppen des α-Olefins aus.

PP = Polypropylen
EPM = Ethylen/Propylen-Mischpolymerblock und
EBM = Ethylen/α-Olefin-Mischpolymerblock, beispielsweise Ethylen/1-Buten-Mischpolymerblock

Die Indizes liegen in den folgenden Bereichen:

| | | |
|---|---|---|
| k = 70 bis 1.000 | $x_1$ = 0 bis 0,3 | $y_1$ = 0,7 bis 1,0 |
| l = 20 bis 300 | $x_2$ = 0,3 bis 0,9 | $y_2$ = 0,1 bis 0,7 |
| m = 0 bis 500 | $x_3$ = 0,2 bis 0,9 | $y_3$ = 0,1 bis 0,8 |
| | | z = 1 bis 5 |

Der Kristallinitätsgrad des gepfropften Olefin-Blockcopolymers beträgt zweckmäßig 5 bis 20 %. Bevorzugt liegt er zwischen 10 und 20 %. Typisch für dieses Polymer sind E-Moduli im Bereich von 30 bis 300 MPa. Sie sind damit sehr weich, flexibel und leicht verformbar.

Die Anhydridgruppen (in der Formel I nicht dargestellt) ergeben sich durch statistische seitliche Pfropfung des Grundpolymers. Sie sind ein essentieller Bestandteil des Systems, da Polyamid und reine, d.h. nicht funktionalisierte Polyolefine aufgrund ihrer sehr unterschiedlichen Polarität extrem wechselwirkungsarm und damit molekular völlig unverträglich sind. Die Pfropfung erfolgt allgemein mit Anhydriden von ungesättigten, aliphatischen Di- oder Polycarbonsäuren, wie Maleinsäureanhydrid, Citraconsäureanhydrid oder Itaconsäureanhydrid (= Methylenbernsteinsäureanhydrid). Besonders bevorzugt ist Maleinsäureanhydrid.

Der Anteil der Pfropfgruppen, bezogen auf das Gewicht des Grundpolymers, beträgt vorzugsweise 0,3 bis 0,8 Gew.-%.

Derartige Pfropfungsraten sind mit den aus dem Stand der Technik bekannten Verfahren nicht ohne weiteres erreichbar. Bestandteil der Erfindung ist auch ein Verfahren zur Herstellung des gepfropften Olefin-Blockcopolymers.

Die erfindungsgemäße Polymerlegierung kann schließlich noch Additive in allgemein üblichen Mengen enthalten. Das sind beispielsweise Pigmente, Farbbatches auf Basis von Polyamid oder Polyolefin, Thermo- und/oder UV-Stabilisatoren, mineralische Füllstoffe, native und/oder destrukturierte Stärke. Durch den Zusatz der Stärke kann die Durchlässigkeit der aus der Polymerlegierung hergestellten Folie für Wasserdampf, Sauerstoff und andere Gase auf das gewünschte Maß eingestellt werden.

Die Polyamide und die Olefin-Grundpolymere sind kommerziell erhältlich. Um das Olefin-Polymer zu pfropfen, wird es zweckmäßig zunächst mit Peroxid-Radikalen aktiviert. Bekanntlich kann bei der Generierung von Kettenradikalen als Begleitreaktion auch eine Kettenspaltung (β-scission) - speziell an den Polypropylen-Blöcken - stattfinden, mit der eine Verschlechterung des Polyolefin-Eigenschaftsprofils einhergeht. Die benötigten Peroxid-Radikale resultieren aus einem thermisch induzierten Zerfall von organischen Peroxiden, welche dem Olefin-Blockcopolymer in geringen Mengen mit dem Anhydrid zusammen zugegeben werden.

Zur Verminderung des Polyolefin-Abbaus sowie zur Erhöhung der Pfropfungsrate der vorstehend genannten Aktivierungs- und Funktionalisierungsmoleküle eignet sich, wie überraschend gefunden wurde, eine geringe Menge von (monomerem) Styrol. Durch das Styrol werden Lebensdauer und Selektivität der Radikale erhöht, so daß mehr Anhydrid auf das Basispolymer aufgepfropft und zugleich die Zahl der Kettenbrüche und damit der Kettenabbau vermindert wird.

Maleinsäureanhydrid ist ein ausgesprochener Elektronenakzeptor, der mit einem entsprechenden Elektronendonator einen Charge-Transfer-Komplex bilden kann. Es wird angenommen, daß durch eine erhöhte Elektronendichte in der Umgebung der Maleinsäureanhydrid-Doppelbindung dessen Radikal-Aktivität gesteigert wird, während der Elektronendonator gleichzeitig die Polyolefin-Makroradikalbildung infolge der β-scission vermindert. Monomeres Styrol ist ein solcher Elektronendonator. Die Zugabe des Styrols bewirkt folglich eine deutlich höhere Pfropfungsrate bei gleichzeitiger Verringerung des Kettenabbaus. Styrol steigert die Wirksamkeit des Initiators und begünstigt gleichzeitig die Pfropfungsreaktion des Anhydrids.

Carbonsäureanhydrid wird in einer Menge von 0,1 bis 3,0 phr (phr = parts per hundred resin added), bevorzugt von 0,2 bis 2,0 phr, besonders bevorzugt von 0,4 bis 1,0 phr, zugesetzt. Da nicht die Gesamtmenge an Carbonsäureanhydrid aufgepfropft wird, ergibt sich daraus ein Pfropfungsgrad von 0,3 bis 0,8 Gew.-% an kovalent gebundenem Anhydrid, bezogen auf das Gewicht des Basispolymers. Bei der praktischen Durchführung wird das nicht umgesetzte Anhydrid und das nicht eingebundene Styrol im Zuge eines Schmelze-Entgasungsschrittes entfernt.

Die zur Aktivierung zugegebenen organischen Peroxide zerfallen bei Hitzeeinwirkung in einer mehrstufigen Abbaureaktion zu Peroxidradikalen, die wiederum die Bildung von Kettenradikalen bewirken. Geeignete Peroxide sind insbesondere Dicumylperoxid (DCUP) und 2,5-Dimethyl-2,5-bis-(*tert*.-butylperoxy)-hexan (DHBP). Diese unterscheiden sich in ihrer Zerfallskinetik und in Bezug auf ihren Aktivsauerstoff(AO)-Gehalt (DCUP : AO = 5,6%; DHBP : AO = 9,8%). Das Gewichtsverhältnis von Maleinsäureanhydrid zu Peroxid beträgt vorzugsweise 5 bis 20 (im Fall des DCUP) bzw. 10 bis 30 (im Fall des DHBP). Die Unterschiede ergeben sich aufgrund des höheren AO-Gehaltes von DHBP.

Die Menge des zuzugebenden Styrols muß auf die Anhydridmenge abgestimmt sein. Bevorzugt sind Molverhältnisse Styrol/Maleinsäureanhydrid von 0,4 bis 1,4. Besonders bevorzugt ist ein Verhältnis von etwa 1.

Die auf das Olefin-Blockcopolymer gepfropften Anhydridgruppen können bei der Weiterverarbeitung im Sinne eines "reactive blending" mit den Amino-Endgruppen des Polyamids reagieren. Durch die kompatibilisierende Wirkung des Anhydrids sowie durch die zwischen dem Olefin-Blockcopolymer und dem Polyamid entstehenden kovalenten Bindungen werden die Wechselwirkungen zwischen den Blendpartnern so stark erhöht, daß ein morphologisch stabiler Zweiphasenwerkstoff entsteht.

Generell bestimmt bei derartigen Blends die Morphologie im Legierungsprozeß in entscheidendem Maß das Eigenschaftsprofil. Im vorliegenden Fall wird eine Morphologie angestrebt, bei der eine kontinuierliche Phase aus Polyamid und eine diskontinuierliche, mikrodispers verteilte Phase aus dem Olefin-Blockcopolymer vorliegt. Um den nachfolgenden Folienextrusions- und Verstreckprozeß zu überstehen und um das erforderliche Festigkeitsniveau in der Verpackungsanwendung zu erreichen, sollten die Polyolefin-Partikel in der Legierung Durchmesser $d_p$ zwischen 0,2 und 5,0 μm aufweisen.

Bei den erfindungsgemäßen Polymerlegierungen bestehen ausgeprägte Beziehungen zwischen Struktur und Eigenschaften. Deshalb kommt der Morphologieausbildung im Zuge des reaktiven Blendprozesses herausragende Bedeutung zu. Die entstehende Morphologie läßt sich anhand der nachfolgenden dimensionslosen Kennzahlen, welche Rezeptur-, Stoff- und Prozeßparameter enthalten, beschreiben:

Capillarzahl Ca:

$$Ca = \frac{\eta_{PA}(\dot{\gamma}) \cdot \dot{\gamma} \cdot R}{\sigma_{12}} \quad (1)$$

wobei

| | |
|---|---|
| $\eta_{PA}(\dot{\gamma})$ | die Viskositätsfunktion des Copolyamids, |
| $\dot{\gamma}$ | die Deformationsgeschwindigkeit, |
| $\sigma_{12}$ | die Grenzflächenspannung und |
| R | den Partikelradius |

bedeuten.

Viskositätsverhältnis $\lambda_1$

$$\lambda_1 = \frac{\eta_{PO}(\dot{\gamma})}{\eta_{PA}(\dot{\gamma})} \qquad (2)$$

worin

$\eta_{PO}(\dot{\gamma})$ die Viskositätsfunktion des Polyolefin-Blockcopolymers bedeutet.

Volumenkonzentrationsverhältnis $\lambda_3$

$$\lambda_3 = \frac{\Phi_{PO}}{\Phi_{PA}} \qquad (3)$$

worin

$\phi_{PO}$ die Volumenkonzentration des Polyolefin-Blockcopolymers und
$\phi_{PE}$ die Volumenkonzentration des Copolyamids bedeuten.

Die Capillarzahl Ca korreliert die an den Polyolefinpartikeln angreifenden Verformungsspannungen mit der Grenzflächenspannung $\sigma_{12}$ und dem Partikelradius R.

Die Gleichungen (1) und (2) belegen, daß in einem vorliegenden Geschwindigkeits- bzw. Deformationsgeschwindigkeitsfeld die Capillarzahl Ca und das Viskositätsverhältnis $\lambda_1$ Ortsfunktionen sind.

Die Zerlegung einer Blendkomponente, hier des Polyolefin-Blockcopolymers, in kleinste diskrete Partikel tritt im Zuge von Strömungsvorgängen dann ein, wenn die Capillarzahl Ca einen kritischen Wert $Ca_{krit}$ übersteigt.

$$Ca > Ca_{krit} \qquad (4a)$$

wobei $Ca_{krit}$ eine Funktion von $\lambda_1$ und der Strömungsform ist:

$$Ca_{krit} = f(\lambda_1, \text{Strömungsform}) \qquad (4b)$$

Für eine biaxiale Dehnströmung ergeben sich im gesamten Viskositätsverhältnisspektrum deutlich kleinere $Ca_{krit}$-Werte als für eine einfache Scherströmung, bei der lediglich im Bereich

$$0{,}1 \leq \lambda_1 \leq 3{,}5 \qquad (5)$$

eine hinreichende Dispergierung der Polyolefin-Blockcopolymerphase eintritt.

Aus diesen Zusammenhängen folgt, daß besonders durch Dehnformationen, wie sie in den seitlich offenen Keilspalten breiter Knetblöcke auftreten, ein effizienter Zerteilprozeß bewirkt wird.

Wird unter der Annahme einer in etwa konstanten Grenzflächenspannung $\sigma_{12}$ das Kriterium

$$\frac{\lambda_3}{\lambda_1} = \frac{\Phi_{PO} \cdot \eta_{PA}(\dot{\gamma})}{\Phi_{PA} \cdot \eta_{PO}(\dot{\gamma})} < 1 \qquad (6)$$

erfüllt, so entsteht ein Zweiphasenwerkstoff, der das Polyolefin-Blockcopolymer als mikrodispers verteilte Phase, eingebettet in die kontinuierliche Copolymermatrix, enthält.

Cokontinuierliche Phasenstrukturen bilden sich, wenn das Kriterium

$$\frac{\eta_{PO}(\dot{\gamma})}{\eta_{PA}(\dot{\gamma})} = \frac{\Phi_{PO}}{\Phi_{PA}}$$

erfüllt ist. Solche cokontinuierlichen Phasenstrukturen sind bei der erfindungsgemäßen Polymerlegierung unerwünscht und sollen nicht auftreten.

Je mehr sich das Verhältnis $\lambda_3$ / $\lambda_1$ dem Wert 1 nähert, desto größer fallen die mittleren Polyolefin-Partikeldurchmesser $d_p$ aus und desto gröber ist die Blendstruktur. Mit der Vergröberung geht eine Verminderung, d.h. eine Verschlechterung der mechanischen Kennwerte einher. In Kenntnis dieser Zusammenhänge ist der Fachmann in der Lage, geeignete Mischungsverhältnisse und Partikelbereiche einzustellen.

Die Herstellung der erfindungsgemäßen Polymerlegierungen kann beispielsweise in einem reaktiven Blendprozeß unter Verwendung eines gleichsinnig drehenden, dicht kämmenden Zweischneckenextruders erfolgen. Bei derartigen Compoundierextrudern sind sowohl die Zylindergehäuse als auch die Schneckenelemente modular konzipiert, so daß spezifisch zugeschnittene Zylinderarrangements und Schneckenkonzepte verwirklicht werden können.

Für die Aufbereitung der erfindungsgemäßem Polymerlegierungen empfehlen sich Zweischneckenextruder mit großer Verfahrenslänge, d.h. mit einem großen Verhältnis von Länge zu Durchmesser. Bevorzugte L/D-Verhältnisse liegen im Bereich von 40 bis 56. Der modular aufgebaute Zylinder ist in jeweils 4D lange Heiz-/Kühlzonen unterteilt.

Besonders geeignet ist beispielsweise ein Zweischneckenextruder mit einem Schneckendurchmesser von 40 mm, einem L/D-Verhältnis von 56, einer Schneckendrehzahl von 250 Umdrehungen/min und 14 Heiz-/Kühlzonen. Die Solltemperatur im Innern des Extruders steigt dabei von 180 °C in der 1. Zone in 10 °C -Schritten von Zone zu Zone bis auf 270 °C in der 10. Zone. Sie vermindert sich dann wieder bis auf etwa 250 °C in der 14. Zylinderzone. Die Zudosierung des vorbehandelten Olefin-Blockcopolymers erfolgt zweckmäßig in der 1. Zone des Zweischneckenextruders, vorzugsweise mit Hilfe eines gravimetrisch arbeitenden Dosiersystems. Die Zuspeisung des Polyamidgranulat(gemisch)es erfolgt etwa in der 8. Zone, beispielsweise mit Hilfe eines zweiwelligen Seitenstromdosierers. In einer druckentlasteten Förderzone, in der der Schneckenkanal nur teilweise gefüllt ist, werden flüchtige Komponenten durch Anlegen eines Unterdruckes aus der Polymerschmelze entfernt. Flüchtige Komponenten können herrühren aus ungebundenem Styrol, aus dem Zerfall des organischen Peroxids, aus nicht umgesetztem Carbonsäureanhydrid (dieses wird mittels Kühlfallen aus dem Entgasungsstrom abgeschieden) oder aus dem (Co-)Polyamid (wenn dieses nicht ausreichend vorgetrocknet war und noch Reste von Wasser enthält).

Das so behandelte Polymerblend wird nach dem vollständigen Abschluß aller chemischen Reaktionen einem Strangextrusionswerkzeug zugeführt. Das ausgeformte Strangextrudat durchläuft ein Kühlbad und wird anschließend zu Granulatkörnern zerkleinert. Das Granulat bildet das Ausgangsprodukt für einen nachfolgenden Folienextrusions- und biaxialen Verstreckprozeß.

In einem vorgeschalteten Mischungsschritt wird ein flüssiges Gemisch aus Carbonsäureanhydrid, organischem Peroxid und Styrol der genannten Zusammensetzung erzeugt. Das Gemisch wird zu einer definierten Einwaage von Olefin-Blockcopolymer in einem Rhönrad-Mischergefäß gegeben. Anschließend wird das Gefäß verschlossen und der Mischvorgang eingeleitet. Aufgrund des niedrigen Kristallinitätsgrades des Polyolefins wird das Flüssigkeitsgemisch von den Granulen spontan absorbiert. Diese Technik ergibt eine exzellente Vorverteilung des Reaktionsgemisches auf quasi molekularer Ebene. Das so vorbehandelte Polyolefin-Granulat wird mittels eines gravimetrischen Dosiersystems dem Zweischneckenextruder zugeführt. Eine forcierte Plastifizierung dieser Granulate wird durch die Integration eines ersten Knetblockes in Kombination mit einem distributiven Mischelement sichergestellt. In den Folgezonen zerfällt thermisch das Peroxid, es setzt die beschriebene Wasserstoff-Abstraktion und die Anhydrid-Aufpfropfung auf die radikalischen Kettenpositionen ein. Kombinationen von Knetblöcken und Mischteilen garantieren einen zügigen Abschluß der Pfropfungsreaktion und eine totale Degradation des vorhandenen Peroxids. Nach Abschluß der Pfropfungsreaktion wird das Polyamidgranulat(gemisch) mittels eines Seitenstromdosierers dem Compoundierextruder zugeführt. Durch Anheben der Gehäuse- bzw. Zylindertemperaturen auf bis zu 270˚C wird das Polyamid erschmolzen und die Kopplungsreaktion zwischen den Aminoendgruppen und den Anhydridgruppen initiiert. Nach homogener Durchmischung des Gesamtsystems erfolgt eine forcierte Schmelzeentgasung. In dem abschließenden Gewindeabschnitt des Zweischneckenextruders erfolgt der Druckaufbau zur Überwindung des Strömungswiderstandes vom Strangextrusionskopf.

Als vorteilhaft hat sich erwiesen, kurz vor dem Extrusionskopf in-line- oder on-line-messende Sensoren zu installieren, welche konstatieren, ob die chemischen Reaktionen vorstellungsgemäß ablaufen. Als Sensorsysteme haben sich On-line-Rheometer (dynamisch oder stationär messend) und on-line-messende FTIR-Spektrometer bewährt.

Gegenstand der vorliegenden Anmeldung ist auch eine Flach- oder Schlauchfolie, die aus der erfindungsgemäßen Polymerlegierung besteht oder mindestens eine Schicht daraus umfaßt. Die Folie ist vorzugsweise mono- oder biaxial orientiert.

Zur Herstellung biaxial orientierter Flach- und Schlauchfolien eignen sich Extrusionsverfahren, bei denen Folien zunächst auf thermoplastischem Weg erzeugt und anschließend aus dem thermoelastischen Zustand nachverstreckt werden. Solche Verfahren sind dem Fachmann an sich bekannt.

Für die Herstellung von Flachfolien wird das zuvor beschriebene Polymerblend in einem Extruder - bevorzugt Einschneckenextruder - erneut aufgeschmolzen. Die Temperaturen im Extruder richten sich nach dem Schmelzpunkt der Polyamid-komponente(n); in der Regel werden Umwandlungs- und Meteringzone auf Temperaturen von 30 bis 50˚C oberhalb des Schmelzpunktes der höchstschmelzenden Komponente geheizt. Der Extruderfördert die Schmelze durch eine Breitschlitzdüse. Der austretende Schmelzefilm wird auf einer Kühlwalze zum Erstarren gebracht. Dabei ist eine schnelle Abkühlung anzustreben, um eine vorzeitige Kristallisation der Polymere zu verhindern. Die entstandene Primärfolie wird abgezogen und anschließend erneut auf eine Temperatur oberhalb der Glasumwandlungstemperatur des Polyamids - typischerweise im Bereich 70 bis 95˚C - aufgeheizt. Das kann beispielsweise durch Heißluft oder mit Hilfe von IR-Strahlern erfolgen. Besonders zweckmäßig wird sie dann in einem direkt nachgeschalteten, kontinuierlich arbeitenden Streckrahmen in Längs- und Querrichtung orientiert. Entsprechende Streckrahmen sind bekannt und von mehreren Herstellern kommerziell erhältlich. Je nach Bauart liefern sie eine quasi-simultane Streckung (die Längsstreckung läuft der Querstreckung etwas voraus) oder eine voll-simultane Streckung. Die geometrischen Streckfaktoren sollten im Bereich 2 bis 4,5 (längs wie quer) liegen. Bevorzugt sind Werte von 2,5 bis 3,5 in Längs- und von 3,2 bis 4 in Querrichtung.

Nach Verlassen der Streckzone kann die Folie optional noch einer weiteren Wärmebehandlung (Thermofixierung) unterworfen werden. Hierdurch wird die Neigung der Folie zum Schrumpfen in der Wärme (Thermoschrumpf) gemindert oder vollständig beseitigt. Die Folie wird dabei üblicherweise auf Temperaturen zwischen 100 und 180˚C erwärmt. Als Wärmequelle eignen sich die oben schon genannten Medien, oder man überträgt die Wärme mittels beheizter Walzen.

Zum Schluß läuft die Folie über eine Anordnung von Kühl- und Glättwalzen und kann dann aufgewickelt und weiterverarbeitet werden.

Die Herstellung orientierter Schlauchfolien folgt dem gleichen Grundprinzip. Jedoch wird die Schmelze durch eine Ringdüse extrudiert und anschließend abgekühlt, so daß es zur Ausbildung eines gleichförmigen Primärschlauches kommt. Die Ausbildung des Primärschlauchs kann z.B. durch Einbringen von Luft oder einer geeigneten Flüssigkeit in das Schlauchinnere oder auch mittels einer Kalibriervorrichtung, durch die der Schlauch hindurchgeführt wird, kontrolliert werden. Kalibriervorrichtungen sind die bevorzugte technische Lösung.

Der erkaltete Primärschlauch durchläuft ein Quetschwalzenpaar, anschließend die Aufheizzone und ein weiteres Quetschwalzenpaar. Mittels eines zwischen den Walzen eingeschlossenen Luftvolumens wird eine gleichzeitige Längs- und Querverstreckung aufgezwungen. Die Längsstreckung wird zusätzlich über die Voreilung des zweiten Walzenpaares gesteuert. Die Streckfaktoren entsprechen etwa den oben für die Flachfolien genannten Werten.

Auch die Schlauchfolie kann eine anschließende Thermofixierung erfahren. Dazu läßt man den Schlauch eine weitere Heizzone passieren, wobei die Erwärmung im flachgelegten oder auch im erneut aufgeblasenen Zustand erfolgen kann. Als Wärmequellen kommen wieder Heißluft, IR-Strahlung oder - im Fall des flachliegenden Schlauchs - beheizte Walzen in Frage. Die Schlauchtemperatur kann je nach gewünschtem Thermo-Restschrumpf zwischen 100 ˚C und 170˚C liegen.

Der so behandelte, flachgelegte Schlauch wird gekühlt und in aufgewickelter Form gelagert bevor er weiterverarbeitet wird.

Das beschriebene Verfahren zur Schlauchherstellung ist dem Fachmann auch unter dem Begriff "double-bubble-Verfahren" bekannt.

Für spezielle Anwendungen, z.B. wenn eine Folie mit erhöhter Wasserdampf-Sperre gewünscht wird, sind mehrschichtige Strukturen von Vorteil, bei denen mindestens eine Schicht aus der erfindungsgemäßen Polymerlegierung besteht. Die zusätzlichen Schichten können aus Polyolefinen (z.B. PE oder PP), (Co-)Polyamiden, (Co-)Polymeren mit ethylenisch ungesättigten Monomeren (z.B. Vinylacetat, Vinylalkohol oder (Meth-)acrylsäure), aus Vinylidenchlorid-oderAcrylsäurecopolymeren, aus Ionomerharzen oder Mischungen dergenannten (Co-)Polymere bestehen. Bevorzugt sind Schichten aus PE und Copolyamiden.

Bei einer zweischichtigen Struktur befindet sich die zusätzliche Schicht vorzugsweise auf der später dem Verpackungs- bzw. Füllgut zugewandten Seite (beim Schlauch die Innenseite). Bei mehr als zwei Schichten können diese in unterschiedlicher Weise angeordnet sein.

Um eine Haftung zwischen den Schichten zu erreichen, müssen in der Regel haftvermittelnde Zusätze in die Struktur eingebracht werden. Geeignet sind die üblichen in der Coextrusion verwendbaren Haftvermittler-Polymere. Unter diesen werden anhydridgepfropfte Polyolefine bevorzugt. Der Haftmittler kann entweder als Beimischung zu einer oder mehreren der zusätzlichen Schichten oder auch in Form einer oder mehrerer diskreter Schichten vorliegen.

Die erfindungsgemäßen Mehrschichtfolien umfassen gewöhnlich nicht mehr als 5 Schichten.

Die Herstellung der mehrschichtigen Folien erfolgt im allgemeinen mit Hilfe von Coextrusions-Düsen. Solche Düsen können als Breitschlitz- oder als Ringkanaldüsen geformt sein. Die Düse wird von einem oder mehreren Extrudern mit der erfindungsgemäßen Polymerlegierung und von weiteren Extrudern mit dem/den weiteren Polymer(en) gespeist. Der austretende Schmelzefilm besteht dann aus übereinanderliegenden Schichten. Verfestigung, Verstreckung, gegebenenfalls auch Thermofixierung erfolgen dann, wie bereits beschrieben.

Die folgenden Beispiele dienen zur Erläuterung der Erfindung. Die Bezeichnung "phr" steht dabei für "parts per hundred resin" (Gewichtsprozent, bezogen auf die vorgelegte Menge an Polymer(en)). Prozente sind Gewichtsprozente, soweit nicht anders angegeben. (V) steht für Vergleich bzw. Vergleichsversuch.

In den Beispielen werden die folgenden Verbindungen verwendet:

1. Ein Blockcopolymer auf Basis von PP- und EPM-Blöcken mit einer Dichte von 0,88 bis 0,90 g/cm$^3$, einem Schmelzpunkt (bestimmt durch Differential Scanning Calorimetry, DSC) von 144 ˚C, einem Melt-Flow-Index (MFI) von 0,6 g/10 min bei 230 ˚C und einer Belastung von 2,16 kg sowie einem E-Modul von 121 MPa, erhältlich unter der Bezeichnung ® Hifax CA 10A von Montell Polyolefins (im folgenden auch als "PP" abgekürzt),

2. ein Copolyamid 6/66 mit einem Schmelzpunkt $T_m$ von 196 ˚C (bestimmt durch DSC) und einer relativen Viskosität von 3,2 dl/g (bestimmt in 96 %iger Schwefelsäure), erhältlich unter der Bezeichnung ® Ultramid C 35 von der BASF Aktiengesellschaft (im folgenden auch als "PA" abgekürzt),

3. Maleinsäureanhydrid (MAH),

4. Dicumylperoxid (DCUP),

5. 2,5-Dimethyl-2,5-bis-(*tert*.-butylperoxy)-hexan (DHBP),

6. Styrol (St).

Die Produkte wurden anhand der folgenden Parameter charakterisiert:

*1. Mechanische Parameter*

a) Reißspannung $\sigma_B$ [N/mm$^2$]
b) Reißdehnung $\varepsilon_B$ [%]
c) Spannung bei 5 % Dehnung $\sigma_5$ [N/mm$^2$]
d) Spannung bei 15 % Dehnung $\sigma_{15}$ [N/mm$^2$]
Die entsprechenden Meßwerte wurden bestimmt mit einem Zug-Dehnungsgerät gemäß DIN 53455 (Vorschub: 50 mm/min).
e) Dehnung der aufgeblasenen Schlauchfolie:

Dazu wird ein etwa 1 m langer Schlauchabschnitt an einem Ende dicht verschlossen und vom anderen Ende her mit Druckluft bis zu einem definierten Enddruck beaufschlagt. Anschließend wird der Umfang des unter Druck stehenden Schlauchs bestimmt. Der Dehnungswert $\varepsilon_P$ ergibt sich aus der Gleichung

$$\epsilon_P = \frac{U_P - U_o}{U_o} \cdot 100 \quad [\%]$$

worin

$U_P$ den Umfang des Schlauchs beim Aufblasdruck p und
$U_o$ den Anfangsumfang (doppelte Flachbreite) bezeichnen.

Die Dehnung beim Aufblasen ergibt einen Anhaltspunkt, wie sich die Hülle bei einem Einsatz als Wursthülle verhalten wird. Beim Füllen mit Wurstbrät werden üblicherweise Innendrücke von 20 bis 25 kPa erreicht.

2. *Sonstige Parameter*

f) Wasserdampfdurchlässigkeit (Water-vaporTransmission Rate, WTR) Die Bestimmung erfolgt gemäß DIN 53 122.
g) Thermoschrumpf
Dazu wird bestimmt, um wieviel die Länge oder Breite eines Probestücks der Folie abnimmt, wenn dieses vorher 15 min lang in 80 °C warmem Wasser gelegen hat.

Herstellungsbeispiel 1

100 phr PP-Granulat ® Hifax CA 10A wurden in einen Rhönradmischer gegeben. Hinzugefügt wurden dann

0,5 phr Maleinsäureanhydrid,
0,033 phr Dicumylperoxid (→ MAH/DCUP = 15) und
0,48 phr Styrol (St),

jeweils bezogen auf die PP-Komponente. In dem dicht verschlossenen Mischer wurden die Komponenten dann 30 min lang gemischt. Anschließend wurde das so beladene Granulat mittels eines gravimetrisch arbeitenden Dosiersystems in die Einfüllöffnung des bereits weiter oben beschriebenen Zweischneckenextruders, Typ ZSK 40 mit einem L/D-Verhältnis von 56 und 14 Heiz- bzw. Kühlzonen gegeben. Die Schneckendrehzahl betrug 250 /min. Der Massestrom wurde mit $\dot{m}_1$ = 10,5 kg/h fest vorgegeben. In den ersten 8 Zonen erfolgte das Aufschmelzen des PP, der Peroxidzerfall, die PP-Kettenaktivierung durch die Peroxidradikale und die Pfropfung des Maleinsäureanhydrids auf die Makroradikale. Zu der 8. Zone wurde das Copolyamid C35 mit Hilfe eines gleichfalls gravimetrisch beschickten zweiwelligen Seitenstromdosierers zugeführt (Massestrom $\dot{m}_2$). Stromabwärts waren Knetblöcke und distributiv arbeitende Mischteile installiert, die die Ausbildung eines Zweiphasensystems, in dem das PP und das Copolyamid PA 6/66 über die aufgepropften Maleinsäureanhydrid-Moleküle kovalent gekoppelt sind, bewirkten. Flüchtige Produkte, die insbesondere beim thermischen Abbau des Peroxids entstehen, wurden - wie beschrieben - abgezogen und in einer mit flüssigem Stickstoff gekühlten Kühlfalle gesammelt. Bei einem Polyamid-Massestrom $\dot{m}_2$ von 19,5 kg/h ergab sich ein Gesamtdurchsatz $\dot{m}_G$ (= $\dot{m}_1 + \dot{m}_2$) von 30 kg/h. Die homogenisierte Polymerschmelze wurde schließlich in Form von Rundsträngen extrudiert. Die Rundstränge wurden in einem Kühlbad gekühlt und dann zu Granulat zerkleinert. Das Gewichtsverhältnis PA : PP in dem Produkt betrug demnach 65 : 35. Das Polymerblend wies eine kontinuierliche Polyamidphase mit darin eingebetteten, mikrodispers verteilten PP-Domänen auf.

Herstellungsbeispiel 2:

Beispiel 1 wurde wiederholt mit der Abweichung, daß anstelle des Dicumylperoxids 2,5-Dimethyl-2,5 bis-(*tert*.-butylperoxy)-hexan als Radikalstarter eingesetzt wurde. Aufgrund des höheren Aktiv-Sauerstoffgehalts wurde ein Maleinsäureanhydrid : 2,5-Dimethyl-2,5-bis-(*tert*.-butylperoxy)-hexan-Verhältnis von 20 gewählt, was einem Peroxid-Anteil von 0,025 phr entspricht. Darüber hinaus wurden die Masseströme $\dot{m}_1$ und $\dot{m}_2$ (bei unverändertem Gesamtdurchsatz) variiert ($\dot{m}_1$ vermindert auf 9,0 kg/h; $\dot{m}_2$ erhöht auf 21,0 kg/h). Das Verhältnis PA : PP lag demnach bei 70 : 30.

Herstellungsbeispiel 3:

Beispiel 2 wurde wiederholt mit der einzigen Abweichung, daß $\dot{m}_1$ auf 12,0 kg/h erhöht und $\dot{m}_2$ auf 18,0 kg/h vermindert war. Das Verhältnis PA : PP betrug demnach 60 : 40.

Herstellungsbeispiele 4 bis 6:

Beispiel 1 wurde wiederholt mit der Abweichung, daß die Anteile der zur Pfropfung eingesetzten Verbindungen geändert waren. Die Polymere und deren Masseverhältnis (PA : PP = 65 : 35) waren dagegen wie im Beispiel 1.

Tabelle 1

| Beispiel | Anteile in phr | | | |
|---|---|---|---|---|
| Nr. | Hifax CA10 | MAH | DCUP | Styrol |
| 4 | 100 | 0,25 | 0,0166 | 0,24 |
| 5 | 100 | 0,50 | 0,033 | 0,48 |
| 6 | 100 | 1,50 | 0,100 | 1,44 |

Herstellungsbeispiel 7 (Vergleich):

Gemäß Beispiel 1 wurde ein Blend aus PP und PA hergestellt, wobei jedoch auf die Zugabe von Maleinsäureanhydrid, Dicumylperoxid und Styrol gänzlich verzichtet wurde.

Verarbeitungsbeispiele:

Die gemäß den Beispielen 1 bis 7 hergestellten Blends wurden zu Blasfolien verarbeitet. Dazu wurde eine Labor-Schlauchfolienblasanlage der Fa. Collin eingesetzt. Das Aufblasverhältnis $D_F$ / $D_o$ betrug 3,0, der Längsverzug $V_F$ / $V_o$ etwa 6. An den dabei erhaltenen Folien wurden die Reißspannung und die Reißdehnung quer zur Abzugsrichtung (= Maschinenrichtung) gemessen. Folgende Werte wurden dabei bestimmt:

Tabelle 2

| Beispiel Nr. | 1 | 2 | 3 | 4 | 5 | 6 | 7 |
|---|---|---|---|---|---|---|---|
| $\sigma_B$ [N/mm$^2$] | 72 | 79 | 69 | 48 | 72 | 53 | 25 |
| $\varepsilon_B$ [%] | 553 | 562 | 535 | 462 | 553 | 457 | 320 |

Die Werte in der Tabelle zeigen, daß die aus der erfindungsgemäßen Polymerlegierung hergestellten Blasfolien erst bei einer deutlich höheren Spannung reißen. Die Reißdehnung ist gegenüber dem Vergleichsbeispiel ebenfalls verbessert.

Beispiel 8:

In einem Einschneckenextruder, dessen Temperaturprofil von 160 ˚C in der Einfüllzone bis 240 ˚C am Düsenkopf reichte, wurde das in Beispiel 1 beschriebene Granulat erneut aufgeschmolzen und durch eine Ringdüse extrudiert. Mit Hilfe einer Kalibriervorrichtung wurde die Polymerschmelze zu einem Primärschlauch von 21 mm Durchmesser verfestigt. Der Primärschlauch durchlief dann zwei Quetschwalzenpaare, deren Umfangsgeschwindigkeiten im Verhältnis von 1 : 2,2 zueinander standen. Auf diese Weise wurde ein Zug in Längsrichtung ausgeübt. Zwischen den Abquetschungen wurde der Schlauch mit IR-Strahlern auf etwa 75 ˚C erwärmt. Durch ein in das Innere des Schlauches eingebrachtes Luftvolumen wurde die erwärmte Schlauchfolie dann auch in Querrichtung verstreckt. Nach dem Querverstrecken hatte der Schlauch einen Durchmesser von 70 mm.

Als nächstes wurde der Schlauch erneut mit Luft gefüllt und bei etwa 130 ˚C thermofixiert. Dabei reduzierte sich der Durchmesser der Schlauchfolie um etwa 6 %. Danach durchlief die Schlauchfolie ein weiteres Quetschwalzenpaar, wobei beide Walzenpaare die gleiche Umfangsgeschwindigkeit hatten. Schließlich wurde der Schlauch abgekühlt und aufgerollt. Der Enddurchmesser der Schlauchfolie betrug 66 mm bei einer Gesamt-Querverstreckung von 1 : 3,14, einer Gesamt-Längsverstreckung von 1:2,2 und einer Gesamt-Flächenverstreckung von 1:6,91.

Verarbeitungsbeispiel 9:

Das gemäß Beispiel 2 hergestellte Polymerblend wurde wie im Beispiel 8 zu einer verstreckten und thermofixierten Schlauchfolie mit einem Enddurchmesser von 66 mm verarbeitet.

Verarbeitungsbeispiel 10:

Das im Beispiel 3 beschriebene Polymerblend wurde wie im Beispiel 8 zu einer verstreckten und thermofixierten Schlauchfolie verarbeitet. Das Verhältnis der Umfangsgeschwindigkeiten der beiden Walzenpaare betrug jedoch 1 : 2,0.

Verarbeitungsbeispiel 11 (Vergleich):

Reines Polyamid 6/66 (® Ultramid C35) wurde gemäß Beispiel 8 zu einer Schlauchfolie mit einem Durchmesser von 66 mm verarbeitet.

Verarbeitungsbeispiel 12 (Vergleich):

Eine einschichtige Wursthülle gemäß DE-C 28 50 181 mit einem Durchmesser von 60 mm (® Betan der Naturin GmbH) wurde zu Vergleichszwecken untersucht.

Tabelle 3 zeigt die mechanischen Kennwerte der biaxial verstreckten Folien. Alle Folien wurden bei 20 ˚C und 60 % r.F. konditioniert und anschließend ohne weitere Befeuchtung vermessen.

Tabelle 3:

| Beispiel | Folienstärke | $\sigma_5$ quer | $\sigma_{15}$ längs | Dehnung im Aufblasversuch [%] | | Thermoschrumpfquer | Wasserdampfdurchlässigkeit |
|---|---|---|---|---|---|---|---|
| Nr. | µm | N/mm² | N/mm² | bei 25 kPa | bei 50 kPa | % | % |
| 8 | 42 | 20,2 | 46,1 | 7,2 | 13,9 | 6 | 7,6 |
| 9 | 41 | 22,2 | 48,6 | 6,3 | 12,3 | 6 | 7,0 |
| 10 | 43 | 17,5 | 41,0 | 8,8 | 16,1 | 5 | 6,6 |
| 11 (V) | 41 | 36,0 | 62,0 | 2,2 | 4,1 | 8 | 27,0 |
| 12 (V) | 39 | 55,0 | 82,0 | 2,6 | 5,3 | 10 | 13,0 |

Trockene Schlauchabschnitte wurden von Hand mit je 400 g feinkörniger Brühwurstmasse gefüllt und an den Enden mit Metallclips verschlossen. Die Würste wurden anschließend in einem Brühschrank 60 min bei 78 ˚C und 100 % relativer Luftfeuchte gegart. Nach ihrem Abkühlen auf 7 ˚C erfolgte die Beurteilung von Aussehen und Konsistenz (siehe Tabelle 4).

Tabelle 4

| Beispiel | Querdehnung beim Füllen | Endbeurteilung | |
|---|---|---|---|
| Nr. | % | "Sitz" auf dem Füllgut | Besonderheiten |
| 8 | 6,3 | faltenfrei, prall | |
| 9 | 5,9 | faltenfrei, prall | |
| 10 | 6,8 | faltenfrei, sehr prall | |
| 11 (V) | 2,0 | lange Falten im Clipbereich, Folie sitzt locker | Aussaftungen (Geleeabsatz) |
| 12 (V) | 1,8 | Falten über gesamte Wurst, Folie sitzt locker | starke Aussaftungen (Geleeabsatz) |

**Patentansprüche**

1. Polymerlegierung mit einer kohärenten Phase aus einem aliphatischen und/oder teilaromatischen (Co-)Polyamid und einer darin dispergierten Phase aus einem olefinischen Polymer, **dadurch gekennzeichnet, daß** das olefinische Polymer ein mit intramolekularen Carbonsäureanhydriden gepfropftes Olefin-Blockcopolymer ist.

2. Polymerlegierung gemäß Anspruch 1, **dadurch gekennzeichnet, daß** der Anteil der kohärente Polyamidphase 50 bis 95 Gew.-%, bevorzugt 60 bis 90 Gew.-%, besonders bevorzugt 65 bis 80 Gew.-%, jeweils bezogen auf das Gesamtgewicht der Polymerlegierung, beträgt.

3. Polymerlegierung gemäß Anspruch 1 oder 2, **dadurch gekennzeichnet, daß** die kohärente Polyamidphase ein aliphatisches (Co-)Polyamid, eine Mischung mehrerer aliphatischer (Co-)Polyamide oder eine Mischung von mindestens einem aliphatischen (Co-)Polyamid mit mindestens einem teilaromatischen (Co-)Polyamid umfaßt.

4. Polymerlegierung gemäß einem oder mehreren der Ansprüche 1 bis 3, **dadurch gekennzeichnet, daß** das Molekulargewicht $M_n$ des aliphatischen oder teilaromatischen Polyamids etwa 20.000 bis 40.000 g/mol beträgt.

5. Polymerlegierung gemäß einem oder mehreren der Ansprüche 1 bis 4, **dadurch gekennzeichnet, daß** das Olefin-Blockcopolymeraus PP- und EPM-Blöcken aufgebaut ist.

6. Polymerlegierung gemäß einem oder mehreren der Ansprüche 1 bis 4, **dadurch gekennzeichnet, daß** das Olefin-Blockcopolymer aus PP-, EPM-und EBM-Blöcken aufgebaut ist.

7. Polymerlegierung gemäß einem oder mehreren der Ansprüche 1 bis 6, **dadurch gekennzeichnet, daß** der Anteil der Pfropfgruppen 0,3 bis 0,8 Gew.-% beträgt, bezogen auf das Gewicht des Olefin-Blockcopolymers.

8. Polymerlegierung gemäß einem oder mehreren der Ansprüche 1 bis 7, **dadurch gekennzeichnet, daß** das Olefin-Blockcopolymer mit einem Anhydrid einer ungesättigten, aliphatischen Di- oder Polycarbonsäure gepfropft ist.

9. Polymerlegierung gemäß Anspruch 8, **dadurch gekennzeichnet, daß** das ungesättigte, aliphatische Di- oder Polycarbonsäureanhydrid Maleinsäureanhydrid, Citraconsäureanhydrid oder Itaconsäureanhydrid ist.

10. Polymerlegierung gemäß Anspruch 9, **dadurch gekennzeichnet, daß** das Olefin-Blockcopolymer mit Maleinsäureanhydrid in Gegenwart von monomerem Styrol und einem organischen Peroxid gepfropft ist.

11. Polymerlegierung gemäß Anspruch 10, **dadurch gekennzeichnet, daß** das molare Verhältnis von monomerem Styrol zu Maleinsäureanhydrid im Bereich von 0,4 bis 1,4 liegt.

12. Polymerlegierung gemäß einem oder mehreren der Ansprüche 1 bis 11, **dadurch gekennzeichnet, daß** das aliphatische und/oder teilaromatische (Co-)Polyamid und das mit intramolekularen Carbonsäureanhydriden gepfropfte Olefin-Blockcopolymer miteinander unter Bildung von kovalenten Bindungen reagiert haben.

13. Polymerlegierung gemäß einem oder mehreren der Ansprüche 1 bis 12, **dadurch gekennzeichnet, daß** die dispergierte Phase aus Partikeln mit einem Durchmesser $d_p$ von 0,2 bis 5,0 μm besteht.

14. Ein- oder mehrschichtige Flach- oder Schlauchfolie, **dadurch gekennzeichnet, daß** sie aus einer Polymerlegierung gemäß einem oder mehreren der Ansprüche 1 bis 13 besteht oder mindestens eine Schicht daraus umfaßt.

15. Folie gemäß Anspruch 14, **dadurch gekennzeichnet, daß** sie mono- oder biaxial orientiert ist.

16. Folie gemäß Anspruch 14 oder 15, **dadurch gekennzeichnet, daß** sie thermofixiert ist.

17. Verwendung der Schlauchfolie gemäß einem oder mehreren der Ansprüche 14 bis 16 als künstliche Wursthülle.

**Claims**

1. A polymer blend with a coherent phase made from an aliphatic and/or semiaromatic (co)polyamide and, dispersed therein, a phase made from an olefinic polymer, wherein the olefinic polymer is an olefin block copolymer grafted with intramolecular carboxylic anhydrides.

2. The polymer blend as claimed in claim 1, wherein the proportion of coherent polyamide phase is from 50 to 95% by weight, preferably from 60 to 90% by weight, particularly preferably from 65 to 80% by weight, based in each case on the total weight of the polymer blend.

3. The polymer blend as claimed in claim 1 or 2, wherein the coherent polyamide phase encompasses an aliphatic (co)polyamide, a mixture of two or more aliphatic (co)polyamides, or a mixture of at least one aliphatic (co)polyamide with at least one semiaromatic (co)polyamide.

4. The polymer blend as claimed in one or more of claims 1 to 3, wherein the molar mass $M_n$ of the aliphatic or semiaromatic polyamide is from about 20 000 to 40 000 g/mol.

5. The polymer blend as claimed in one or more of claims 1 to 4, wherein the olefin block copolymer is composed of PP blocks and of EPM blocks.

6. The polymer blend as claimed in one or more of claims 1 to 4, wherein the olefin block copolymer is composed of PP blocks, of EPM blocks, and of EBM blocks.

7. The polymer blend as claimed in one or more of claims 1 to 6, wherein the proportion of graft groups is from 0.3 to 0.8% by weight, based on the weight of the olefin block copolymer.

8. The polymer blend as claimed in one or more of claims 1 to 7, wherein the olefin block copolymer has been grafted with an anhydride of an unsaturated, aliphatic di- or polycarboxylic acid.

9. The polymer blend as claimed in claim 8, wherein the unsaturated aliphatic di- or polycarboxylic anhydride is maleic anhydride, citraconic anhydride, or itaconic anhydride.

10. The polymer blend as claimed in claim 9, wherein the olefin block copolymer has been grafted with maleic anhydride in the presence of monomeric styrene and of an organic peroxide.

11. The polymer blend as claimed in claim 10, wherein the molar ratio of monomeric styrene to maleic anhydride is in the range from 0.4 to 1.4.

12. The polymer blend as claimed in one or more of claims 1 to 11, wherein the aliphatic and/or semiaromatic (co) polyamide and the olefin block copolymer grafted with intramolecular carboxylic anhydrides are reacted with one another, forming covalent bonds.

**13.** The polymer blend as claimed in one or more of claims 1 to 12, wherein the dispersed phase is composed of particles with a diameter $d_p$ of from 0.2 to 5.0 μm.

**14.** A flat or tubular film having one or more layers, which is composed of a polymer blend as claimed in one or more of claims 1 to 13, or encompasses at least one layer made therefrom.

**15.** The film as claimed in claim 14, which has been mono- or biaxially oriented.

**16.** The film as claimed in claim 14 or 15, which has been heat-set.

**17.** The use of the tubular film as claimed in one or more of claims 14 to 16 as a synthetic casing for sausages.

**Revendications**

**1.** Alliage de polymères comportant une phase cohérente à base d'un (co)polyamide aliphatique et/ou partiellement aromatique et une phase dispersée dans celle-ci, à base d'un polymère oléfinique, **caractérisé en ce que** ledit polymère oléfinique est un copolymère séquencé oléfinique greffé par des anhydrides d'acides carboxyliques intramoléculaires.

**2.** Alliage de polymères selon la revendication 1, **caractérisé en ce que** la proportion de la phase de polyamide cohérente va de 50 à 95 % en poids, de préférence de 60 à 90 % en poids, plus préférentiellement de 65 à 80 % en poids, respectivement par rapport au poids total de l'alliage de polymère.

**3.** Alliage de polymères selon la revendication 1 ou 2, **caractérisé en ce que** la phase cohérente de polyamide comprend un (co)polyamide aliphatique, un mélange de plusieurs (co)polyamides aliphatiques ou un mélange d'au moins un (co)polyamide aliphatique et d'au moins un (co)polyamide partiellement aromatique.

**4.** Alliage de polymères selon une ou plusieurs des revendications 1 à 3, **caractérisé en ce que** la masse moléculaire $M_n$ du polyamide aliphatique ou partiellement aromatique va d'environ 20 000 à 40 000 g/mole.

**5.** Alliage de polymères selon une ou plusieurs des revendications 1 à 4, **caractérisé en ce que** le copolymère séquencé oléfinique est à base de blocs PP et EPM.

**6.** Alliage de polymères selon une ou plusieurs des revendications 1 à 4, **caractérisé en ce que** le copolymère séquencé oléfinique est à base de blocs PP, EPM et EBM.

**7.** Alliage de polymères selon une ou plusieurs des revendications 1 à 6, **caractérisé en ce que** la proportion des groupes greffés va de 0,3 à 0,8, par rapport au poids du copolymère séquencé oléfinique.

**8.** Alliage de polymères selon une ou plusieurs des revendications 1 à 7, **caractérisé en ce que** le copolymère séquencé oléfinique est greffé par un anhydride d'un acide di- ou polycarboxylique aliphatique insaturé.

**9.** Alliage de polymères selon la revendication 8, **caractérisé en ce que** l'anhydride di- ou polycarboxylique aliphatique insaturé est l'anhydride maléique, l'anhydride citraconique ou l'anhydride itaconique.

**10.** Alliage de polymères selon la revendication 9, **caractérisé en ce que** le copolymère séquencé oléfinique est greffé avec de l'anhydride maléique en présence de styrène monomère et d'un peroxyde organique.

**11.** Alliage de polymères selon la revendication 10, **caractérisé en ce que** le rapport molaire du styrène monomère à l'anhydride maléique se situe dans la plage de 0,4 à 1,4.

**12.** Alliage de polymères selon une ou plusieurs des revendications 1 à 11, **caractérisé en ce que** le (co)polyamide aliphatique et/ou partiellement aromatique et le copolymère séquencé oléfinique greffé avec des anhydrides d'acides carboxyliques intramoléculaires ont réagi l'un avec l'autre, avec formation de liaisons covalentes.

**13.** Alliage de polymères selon une ou plusieurs des revendications 1 à 12, **caractérisé en ce que** la phase dispersée est constitué de particules ayant un diamètre $d_p$ de 0,2 à 5,0 μm.

**14.** Film plat ou tubulaire, mono- ou multicouche, **caractérisé en ce qu'**il est constitué d'un alliage de polymères selon une ou plusieurs des revendications 1 à 13 ou comprend au moins une couche à base de celui-ci.

**15.** Film selon la revendication 14, **caractérisé en ce qu'**il est orienté mono- ou biaxialement.

**16.** Film selon la revendication 14 ou 15, **caractérisé en ce qu'**il est thermofixé.

**17.** Utilisation du film tubulaire selon une ou plusieurs des revendications 14 à 16, à titre d'enveloppe artificielle pour saucisses.